# EUROPÄISCHE PATENTANMELDUNG

(11) **EP 1 983 220 A2**
(43) Veröffentlichungstag der Anmeldung: **22.10.2008**
(21) Anmeldenummer: 08005268.1
(22) Anmeldetag: 20.03.2008
(51) Int. Cl.: F16H 45/02

(54) **Hydrodynamische Kopplungsanordnung**

(30) Priorität: 18.04.2007 DE 102007018272
(71) Anmelder: ZF Friedrichshafen AG, 88038 Friedrichshafen (DE)
(72) Erfinder: Sasse, Christoph, Dr., 97422 Schweinfurt (DE); Reinhardt, Bernd, 97453 Schonungen/Forst (DE); Sueck, Gregor, 97526 Sennfeld (DE); So, Oliver, 97421 Schweinfurt (DE); Rößner, Monika, 97499 Donnersdorf (DE)

(57) **Zusammenfassung**

Eine hydrodynamische Kopplungsanordnung (1) ist mit einem um eine Drehachse (3) drehbaren Kupplungsgehäuse (5) ausgebildet, innerhalb welchem zumindest ein durch wenigstens ein Pumpen- (17) und ein Turbinenrad (19) gebildeter hydrodynamischer Kreis (24) sowie zumindest eine Überbrückungskupplung (56) vorgesehen ist, die zur Herstellung einer Wirkverbindung zwischen einem Antrieb und einem Abtrieb für eine Einrückbewegung und zur Aufhebung dieser Wirkverbindung für eine Ausrückbewegung beaufschlagbar ist. Der hydrodynamische Kreis sowie zumindest ein Druckraum (46) sind zur Beaufschlagung der Überbrückungskupplung an jeweils wenigstens einen Strömungsweg (82,84) angeschlossen, durch welchen der hydrodynamische Kreis oder der zumindest eine Druckraum an wenigstens eine Druckmittelversorgung angeschlossen sind. Zumindest ein während des Betriebszustandes zur Herausführung eines Strömungsmittels aus dem Kupplungsgehäuse dienender Strömungsweg ist mit einer Durchflussvolumen-Reduzierung (132) versehen, die zumindest außerhalb dieses Betriebszustandes für eine wenigstens verzögerte Abnahme des Befüllvolumens im Kupplungsgehäuse sorgt.

## Beschreibung

Die Erfindung betrifft eine hydrodynamische Kopplungsanordnung gemäß dem Oberbegriff des Anspruches 1.

Eine derartige hydrodynamische Kopplungsanordnung, aus der DE 103 58 902 A1 bekannt, dient zur Herstellung oder zur Aufhebung einer Wirkverbindung zwischen einem Antrieb, wie der Kurbelwelle einer Brennkraftmaschine, und einem Abtrieb, wie einer Getriebeeingangswelle, und ist mit einem um eine Drehachse rotierbaren Kupplungsgehäuse versehen. In der DE 103 58 902 A1 ist die Kopplungsanordnung als hydrodynamischer Drehmomentwandler ausgebildet, in welchem ein hydrodynamischer Kreis mit einem Pumpenrad, einem Turbinenrad und einem Leitrad vorgesehen ist. Darüber hinaus ist die hydrodynamische Kopplungsanordnung mit einer Überbrückungskupplung versehen, durch welche der hydrodynamische Kreis bei Momentenübertragungen vom Antrieb zum Abtrieb umgangen werden kann, wobei der Überbrückungskupplung ein Torsionsschwingungsdämpfer mit zwei Umfangsfedersätzen zur Dämpfung von Torsionsschwingungen zugeordnet ist.

Der in der DE 103 58 902 A1 gezeigte hydrodynamische Drehmomentwandler veranschaulicht eine bei hydrodynamischen Kopplungsanordnungen in jüngster Zeit häufig angewandte Entwicklungstendenz, wonach ein von Pumpen-, Turbinen-, und Leitrad umschlossener Torusraum zugunsten eines kompakten Bauraums der Kopplungsanordnung über begrenzte Abmessungen verfügt. Gleichzeitig erfordern eine große Dimensionierung der Überbrückungskupplung zur Übertragung hoher Drehmomente sowie ein leistungsfähiger und daher komplexer Torsionsschwingungsdämpfer erheblichen Bauraum in der Kopplungsanordnung.

Während längerer Stillstandszeiten eines die hydrodynamische Kopplungsanordnung aufnehmenden Kraftfahrzeugs verlässt ein nicht unerheblicher Teil des im Kupplungsgehäuse enthaltenen Fluids das Kupplungsgehäuse, um in das zugeordnete Getriebe abzufließen. Wird daraufhin ein Neustart eingeleitet, verteilt sich das im Kupplungsgehäuse verbliebende Fluid zunächst fliehkraftbedingt innerhalb des Kupplungsgehäuses, so dass lediglich ein Teil dieses Fluides in den Torusraum gelangt, und dort zur Momentenübertragung verfügbar ist. Dieses Problem wird durch Einlegen der Stufe Drive (D) im Getriebe weiter verstärkt, da hierdurch der Antrieb zunächst mit vorbestimmter Drehzahl wirksam ist, der Abtrieb und somit der Torsionsschwingungsdämpfer dagegen zumindest im wesentlichen noch im Stillstand verharren, was trotz anliegender Fliehkraft zu einem Absaugen von Fluid durch den Torsionsschwingungsdämpfer nach radial innen führt, was durch aus dem Torusraum nachgesaugtes Fluid ausgeglichen werden soll. Zwar wird während dieses Betriebszustandes bei Ausführung der hydrodynamischen Kopplungsanordnung als Zwei-Leitungs-System aus einer Fluidbevorratung frisches Fluid über die geöffnete Überbrückungskupplung in das Kupplungsgehäuse eingeleitet, jedoch gelangt auch dieses Fluid zunächst nicht in den Torusraum, sondern wird vielmehr ebenfalls nach radial innen abgesaugt. Diese Bedingungen äußern sich beim Anfahren des Fahrzeuges in einer Weise, dass der zumindest weitgehend entleerte Torusraum ebenso wie die geöffnete Überbrückungskupplung kaum zur Übertragung des vom Antrieb eingeleiteten Drehmomentes auf den Abtrieb befähigt ist. Einzig an der Überbrückungskupplung anliegende Schleppmomente vermögen eine Übertragung eines Restdrehmomentes sicher zu stellen. Erst mit langsam zunehmender, weiterer Befüllung des Kupplungsraums beginnt ein Übertritt frischen Fluids in den Toruskreis und damit eine Befüllung desselben. Eine derartige Leistungscharakteristik ist bei einem modernen Kraftfahrzeug nicht tolerierbar.

Der Erfindung liegt die Aufgabe zugrunde, eine hydrodynamische Kopplungsanordnung derart auszubilden, dass bei einem Neustart eines Kraftfahrzeuges auch nach Ablauf einer Mindeststillstandszeit ein zufriedenstellend hoher Befüllstand im Kupplungsraum und damit eine hinreichende Drehmomentenübertragbarkeit sicher gestellt ist.

Diese Aufgabe wird durch die im Anspruch 1 angegebenen Merkmale gelöst. Durch Ausbildung zumindest eines zur Befüllung eines Kupplungsgehäuses dienenden Strömungsweges mit einem Verschluß, der durch Öffnung für eine Freigabe des Strömungsweges während des Betriebszustandes der hydrodynamischen Kopplungsvorrichtung vorgesehen ist, außerhalb dieses Betriebszustandes aber durch Schließung für eine zumindest verzögerte Abnahme des Innendruckes im Kupplungsgehäuse und damit dessen Befüllvolumens sorgt, wird erreicht, dass bei Betriebszustand eines die hydrodynamische Kopplungsanordnung aufweisenden Kraftfahrzeugs stets frisches Fluid, nachfolgend als Strömungsmittel bezeichnet, in das Kupplungsgehäuse und insbesondere hierbei in den hydrodynamischen Kreis eingeleitet werden kann, während bei Beginn einer Stillstandszeit für dieses Kraftfahrzeug und damit der hydrodynamischen Kopplungsvorrichtung lediglich ein vernachlässigbar kleiner Anteil des im Kupplungsgehäuse enthaltenen Strömungsmittels aus dem Kupplungsgehäuse austreten und in ein zugeordnetes Getriebe einsickern kann, und somit auch nach längeren Stillstandszeiten des Kraftfahrzeuges zumindest der wesentliche Teil des beim Abschalten des Kraftfahrzeuges im Kupplungsgehäuse enthaltenen Strömungsmittels für den Aufbau einer Drehmomentübertragung bei Beginn eines erneuten Betriebszustandes zur Verfügung steht, so dass jederzeit eine bestimmungsgemäße Nutzung der hydrodynamischen Kopplungsanordnung sichergestellt ist. Diese Wirkung des Verschlusses erklärt sich wie folgt:

Der Verschluss ist mit besonderem Vorteil zwischen einer Zuführung eines Strömungsweges und einem Raum im Kupplungsgehäuse, wie dem hydrodynamischen Kreis, angeordnet. Üblicherweise liegt bei Betriebszustand der hydrodynamischen Kopplungsanordnung in der Zuführung des Strömungsweges ein beträchtlich höherer Druck an als in dem hydrodynamischen Kreis, so dass der Verschluss, der eine Trennstelle innerhalb des Strömungsweges bildet, aufgrund des Überdruckes in der Zuführung gegenüber dem hydrodynamischen Kreis offen gehalten wird. Mit Vorzug ist hierbei der Verschluss in Richtung zur Zuführung vorgespannt, so dass eine Öffnung des Verschlusses erst ab einem vorbestimmten, die Vorspannung überschreitenden, vorbestimmten Druck- und Kraftverhältnis erfolgt. Das Druckverhältnis wird hierbei zwischen Zuführung des Strömungsweges und hydrodynamischem Kreis erzeugt, das Kraftverhältnis aufgrund der Einwirkung der im Betriebszustand anliegenden Fliehkraft. Sobald nun der Betriebszustand der hydrodynamischen Kopplungsanordnung durch Stillsetzen des dieselbe aufweisenden Kraftfahrzeuges beendet wird, endet der Drucküberschuss in der Zuführung des Strömungsweges gegenüber dem hydrodynamischen Kreis ebenso wie die Wirkung der Fliehkraft, woraufhin der Verschluss aufgrund seiner Vorspannung in Richtung zur Zuführung eine Schließung erfährt. Dadurch wird der hydrodynamische Kreis in seinem Zuströmungsbereich zumindest im wesentlichen druckdicht, so dass ein Absickern von innerhalb des hydrodynamischen Kreises verbliebenem Strömungsmittel im Abströmungsbereich des hydrodynamischen Kreises eine Druckminderung auslöst. Diese Druckminderung bewahrt zumindest im wesentlichen weiteres Strömungsmittel vor einem Verlassen des hydrodynamischen Kreises über dessen Abströmungsbereich, so dass der Verschluss letztendlich nach Schließung dafür sorgt, ohne Versperrung des Abströmungsbereiches das außerhalb des Betriebszustandes im Kupplungsgehäuse verbliebene Strömungsmittel zumindest mit einem wesentlichen Anteil hiervon innerhalb des Kupplungsgehäuses zu halten.

Zur Nutzung der zuvor bereits erwähnten positiven Wirkung der Fliehkraft ist der Verschluß so angeordnet und ausgebildet, dass die Fliehkraft die Öffnung des Verschlusses im Betriebszustand unterstützt, während außerhalb des Betriebszustandes keine Fliehkraft wirkt, und somit die zuverlässige Schließung des Verschlusses nicht gehemmt wird.

Ohne den erfindungsgemäßen Verschluss würde bei einem durch das Absickern von Strömungsmittel über den Abströmungsbereich ausgelösten Druckverlust im Kupplungsgehäuse, insbesondere hierbei im hydrodynamischen Bereich, ein Nachsaugen von Luft über den Zuströmungsbereich ausgelöst, der außerhalb des Betriebszustandes im wesentlichen drucklos ist. Die nachgesaugte Luft könnte in einzelne Bereiche des Kupplungsgehäuses vordringen, und dadurch Lufteinlagerungen bilden, durch welche die Aufnahme von Strömungsmittel im Kupplungsgehäuse und damit dessen Befüllungsgrad begrenzt wäre, und gleichzeitig ein schnelleres Herausfördern von Strömungsmittel aus dem Kupplungsgehäuse begünstigt wird. Aufgrund des im Betriebszustand in Schließstellung gehaltenen Verschlusses wird ein Nachsaugen von Luft über den Zuströmbereich und damit eine Begrenzung des Befüllungsgrades des Kupplungsgehäuses allerdings wirksam verhindert.

In vorteilhafter Ausgestaltung ist der Verschluß an einer innerhalb des Kupplungsgehäuses vorgesehenen Nabe ausgebildet, welche von Strömungsdurchlässen zumindest eines Strömungsweges durchdrungen ist. Mit Vorzug handelt es sich um eine Nabe, an welcher das Turbinenrad und/oder ein Torsionsschwingungsdämpfer aufgenommen ist, und welche daher kurz als Trägernabe bezeichnet werden soll. In vorteilhafter Ausgestaltung ist der Verschluß entweder als eine die Strömungsdurchlässe zumindest im wesentlichen ringförmig umschließende Elastomerdichtung oder als innerhalb der Strömungsdurchlässe angeordnetes Ventilelement ausgebildet.

Der Verschluss ist jeweils mit einem Verschlußelement ausgebildet, das mit einem Dichtungssitz zusammenwirkt. Das Verschlußelement kann die Trägernabe im Erstreckungsbereich der Strömungsdurchlässe zumindest im wesentlichen ringförmig umgreifen, und zwar mit Vorzug mit Vorspannung in Richtung zu den Strömungsdurchlässen, so dass das Verschlußelement bis zum Erreichen eines der Vorspannung entsprechenden Druck- und Kraftverhältnisses auf seinem Dichtungssitz verbleibt. Ein derartiges Druck- und Kraftverhältnis wird dann anliegen, wenn sich die hydrodynamische Kopplungsvorrichtung außerhalb des Betriebszustandes befindet und daher die Zuströmung des Strömungsweges zumindest im wesentlichen drucklos ist. Bei Übergang in den Betriebszustand übersteigt der in der Zuströmung des Strömungsweges anliegende Druck allerdings die Vorspannung des Verschlußelementes, und hebt dadurch das letztgenannte von seinem Dichtungssitz ab. Dadurch werden die Strömungsdurchlässe des Strömungsweges freigegeben, und in der Zuströmung enthaltenes Strömungsmittel kann den Bereich des Verschlußelementes passieren, um beispielsweise in den hydrodynamischen Kreis einzudringen.

Bei Ausbildung des Verschlusses als Ventileinrichtung innerhalb eines Strömungsdurchlasses des Strömungswegs bleibt bis zum Erreichen des zuvor bereits erläuterten vorbestimmten Druck- und Kraftverhältnisses, also außerhalb des Betriebszustandes, die Ventileinrichtung in Schließstellung, indem das Ventilelement unter Vorspannung, die vorzugsweise durch eine Ventilfeder erzeugt ist, dichtend auf einem Ventilsitz verbleibt. Bei Überschreitung dieses Druck- und Kraftverhältnisses im Betriebszustand wird dagegen ein Abhub des Ventilelementes gegen die Vorspannung der Ventilfeder von dem Dichtungssitz und damit die Freigabe der Strömungsdurchlässe ausgelöst. Mit besonderem Vorzug ist die Ventileinrichtung durch ein Drosselrückschlagventil gebildet.

Im Folgenden wird ein Ausführungsbeispiel für die Erfindung angegeben. Es zeigt im Einzelnen:
- Fig. 1: die obere Hälfte eines Längsschnittes durch ein Kupplungsgehäuse einer hydrodynamischen Kopplungsvorrichtung mit einer Mehrzahl von Strömungswegen für fluidförmiges Medium,
- Fig. 2: eine vergrößerte Herauszeichnung des in Fig. 1 mit Y bezeichneten eingekreisten Bereiches zur Darstellung eines Strömungsweges mit einem Verschluß für denselben in Form einer Abdichtung an einer zur Aufnahme eines Torsionsschwingungsdämpfers sowie des Turbinenrades dienenden Nabe,
Fig. 3 wie Fig. 2, aber mit einem durch eine Ventileinrichtung gebildeten Verschluß.

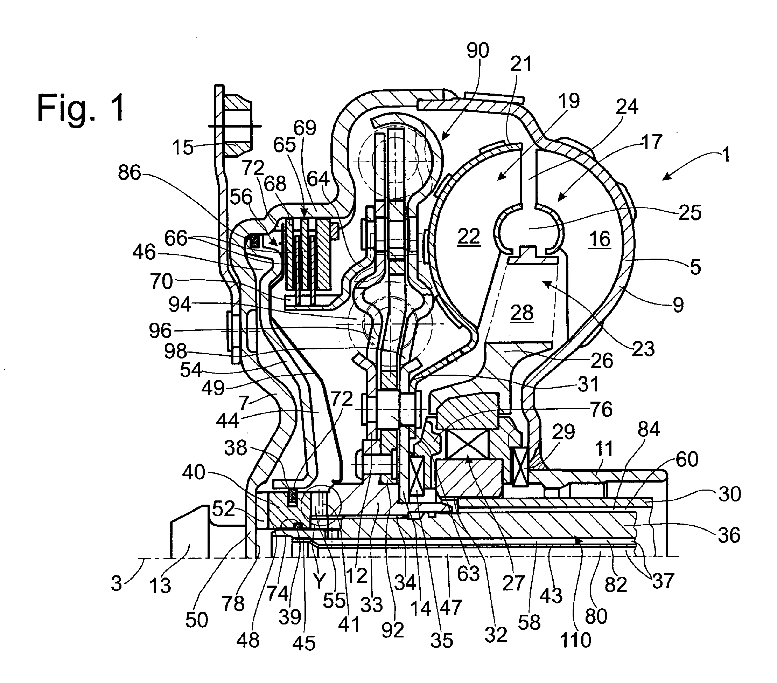

In Fig. 1 ist eine hydrodynamische Kopplungsvorrichtung 1 dargestellt, ausgebildet als hydrodynamischer Drehmomentwandler. Die hydrodynamische Kopplungsvorrichtung 1 weist ein Kupplungsgehäuse 5 auf, das um eine Drehachse 3 Rotationsbewegungen auszuführen vermag. Das Kupplungsgehäuse 5 verfügt an seiner einem nicht gezeigten Antrieb, wie beispielsweise einer Kurbelwelle einer Brennkraftmaschine, zugewandten Seite über eine antriebsseitige Gehäusewandung 7, die mit einer Pumpenradschale 9 fest verbunden ist. Diese geht im radial inneren Bereich in eine Pumpenradnabe 11 über.

Zurückkommend auf die antriebsseitige Gehäusewandung 7, weist diese an ihrer dem nicht gezeigten Antrieb zugewandten Seite einen Lagerzapfen 13 auf, der in bekannter und daher nicht näher dargestellter Weise an einem Element des Antriebs, wie beispielsweise der Kurbelwelle, zur antriebsseitigen Aufnahme des Kupplungsgehäuses 5 vorgesehen ist. Weiterhin verfügt die antriebsseitige Gehäusewandung 7 über eine Befestigungsaufnahme 15, die üblicherweise zur Befestigung des Kupplungsgehäuses 5 am Antrieb dient, und zwar vorzugsweise über eine nicht gezeigte Flexplatte. Bezüglich einer zeichnerischen Darstellung der Aufnahme des Lagerzapfens eines hydrodynamischen Kopplungselementes in einer Kurbelwelle eines Antriebs sowie einer Anbindung des hydrodynamischen Kopplungselementes über eine Flexplatte an die Kurbelwelle wird beispielhaft auf die DE 32 22 119 C1, Fig. 1 verwiesen.

Die bereits erwähnte Pumpenradschale 9 bildet zusammen mit Pumpenradschaufeln 16 ein Pumpenrad 17, das mit einem eine Turbinenradschale 21 sowie Turbinenradschaufeln 22 aufweisenden Turbinenrad 19 sowie mit einem Leitrad 23 zusammenwirkt. Pumpenrad 17, Turbinenrad 19 und Leitrad 23 bilden in bekannter Weise einen hydrodynamischen Kreis 24, der einen Innentorus 25 umschließt.

Erwähnt werden sollte weiterhin, dass Leitradschaufeln 28 des Leitrades 23 auf einer Leitradnabe 26 vorgesehen sind, die auf einem Freilauf 27 angeordnet ist. Der Letztgenannte stützt sich über eine Axiallagerung 29 an der Pumpenradnabe 11 axial ab und steht über eine Verzahnung 32 in drehfester, aber axial relativ verschiebbarer Verbindung mit einer Stützwelle 30, die radial innerhalb der Pumpenradnabe 11 angeordnet ist. Die als Hohlwelle ausgebildete Stützwelle 30 ihrerseits umschließt eine als Abtrieb 110 der hydrodynamischen Kopplungsvorrichtung 1 dienende Getriebeeingangswelle 36, die mit einer Mittenbohrung 37 versehen ist. Diese Mittenbohrung 37 nimmt eine Hülse 43 auf, und zwar derart, dass die Hülse 43 mittels Abstützbereichen 45 radial in der Mittenbohrung 37 zentriert ist. Mit Axialversatz zu diesen Abstützbereichen 45 bildet die Hülse 43 radial zwischen sich und der umschließenden Wand der Mittenbohrung 37 einen ersten Versorgungskanal 58 für fluidförmiges Medium, nachfolgend als Strömungsmittel bezeichnet, aus, der bei der vorliegenden Auslegung der hydrodynamischen Kopplungsanordnung 1 als Zuführung für das Strömungsmittel wirksam ist. Radial innerhalb der Hülse 43 verbleibt ein zentraler Versorgungskanal 47.

Die Getriebeeingangswelle 36 nimmt über eine Verzahnung 34 eine Nabe 33 drehfest, aber axial verschiebbar auf, wobei diese Nabe 33 in einem radial äußeren Bereich zur Befestigung einer abtriebsseitigen Nabenscheibe 92 eines Torsionsschwingungsdämpfers 90 dient. Diese Nabenscheibe 92 wirkt über einen Umfangsfedersatz 94 mit zwei Deckblechen 96, 98 als im Kupplungsgehäuse 5 enthaltenen Bauteilen 12, 14 zusammen, wobei die Deckbleche 96, 98 ebenfalls Teile des Torsionsschwingungsdämpfers 90 sind. Das Deckblech 98 als Bauteil 14 dient zur Aufnahme eines Turbinenradfußes 31 mittels einer Nietverbindung 63, während das andere Deckblech 96 zur Befestigung eines Innenlamellenträgers 64 einer Kupplungsvorrichtung 65, die als Lamellenkupplung ausgebildet ist, vorgesehen ist. Die Kupplungsvorrichtung 65 verfügt sowohl über innere Kupplungselemente 66, die über eine am Innenlamellenträger 64 vorgesehene Verzahnung 70 drehfest mit demselben sind, als auch über äußere Kupplungselemente 68, die mit den inneren Kupplungselementen 68 in Wirkverbindung bringbar sind, wobei die äußeren Kupplungselemente 68 über eine als Außenlamellenträger 69 wirksame Verzahnung 72 mit der antriebsseitigen Wandung 7 und damit mit dem Kupplungsgehäuse 5 in Drehverbindung stehen. Die Kupplungsvorrichtung 65 ist mittels eines axial verlagerbaren Kolbens 54 ein- oder ausrückbar, und bildet gemeinsam mit dem Kolben 54 eine Überbrückungskupplung 56 der hydrodynamischen Kopplungsvorrichtung 1. Wie Fig. 1 zeigt, kann zwischen dem Kolben 54 und dem Torsionsschwingungsdämpfer 90 eine Trennplatte 49 vorgesehen sein, die den hydrodynamsichen Kreis 24 von einem axial durch den Kolben 54 und die Trennplatte 49 begrenzten Versorgungsraum 44 isoliert. An der von diesem Versorgungsraum 44 abgewandten Seite des Kolbens 54 ist, axial durch denselben sowie durch die antriebsseitige Gehäusewandung 7 begrenzt, ein Druckraum 46 vorgesehen. Der Kolben 54 ist im Kupplungsgehäuse 5 zentriert, und gegenüber demselben mittels einer Abdichtung 86 dichtend aufgenommen.

Die Nabe 33, die wegen der Aufnahme des Torsionsschwingungsdämpfers 90, sowie über denselben, mittelbar auch des Turbinenrades 19, nachfolgend als Trägernabe 33 bezeichnet ist, stützt sich einerseits über das Deckblech 98 und eine Lagerung 35, die als Axiallagerung ausgebildet ist, über eine Druckscheibe 76 am Freilauf 27 ab, und kann sich andererseits mit seinem der antriebsseitigen Wandung 7 zugewandten, einen Axiallagerungsbereich 48 bildenden Ende an einer Axialanlagefläche 50 der antriebsseitigen Gehäusewandung 7 axial abstützen, wobei sich diese Axialanlagefläche 50, ausgehend von der Drehachse 3 des Kupplungsgehäuses 5, nach radial außen erstreckt. Innerhalb des Erstreckungsbereiches dieser Axialanlagefläche 50 ist, ausgehend von der Gegenseite der antriebsseitigen Gehäusewandung 7 des Kupplungsgehäuses 5, der Lagerzapfen 13 befestigt.

Nach radial innen hin ist die Trägernabe 33 über eine in einer Dichtungsausnehmung 74 aufgenommenen Abdichtung 39 gegenüber der Getriebeeingangswelle 36 abgedichtet, nach radial außen durch eine in einer Dichtungsausnehmung 72 aufgenommenen Abdichtung 38 gegenüber dem Kolben 54 der Überbrückungskupplung 56. Durch diese beiden Abdichtungen 38, 39 werden Strömungsdurchlässe 52, welche die Trägernabe 33 an ihrem Axiallagerungsbereich 48 durchdringen und mit Vorzug als Nutungen 85 im Axiallagerungsbereich 48 ausgebildet sind, von anderen Strömungsdurchlässen 55, welche im axialen Erstreckungsbereich der Trägernabe 33 zwischen dem Kolben 54 und dem Torsionsschwingungsdämpfer 90 ausgebildet sind, getrennt. Die einen Strömungsdurchlässe 52 stehen mit dem zentralen Versorgungskanal 47 der Hülse 47, der als zentraler Strömungsweg 80 wirksam ist, in Strömungsverbindung, die anderen Strömungsdurchlässe 55 dagegen mit dem ersten Versorgungskanal 58 radial zwischen der Hülse 43 und der dieselbe umschließenden Wand der Mittenbohrung 37 der Getriebeeingangswelle 36, wobei dieser Versorgungskanal 58 als erster Strömungsweg 82 wirksam ist. Darüber hinaus ist ein zweiter Versorgungskanal 60 radial zwischen der Getriebeeingangswelle 36 und der Stützwelle 30 vorgesehen, der bei der vorliegenden Auslegung der hydrodynamischen Kopplungsanordnung 1 als Abführung für das Strömungsmittel wirksam ist, und als zweiter Strömungsweg 84 dient.

Der zentrale Strömungsweg 80 dient, über die Strömungsdurchlässe 52, zur Herstellung eines Überdruckes im Druckraum 46 gegenüber dem Versorgungsraum 44 und damit zur Druckbeaufschlagung des Kolbens 54 der Überbrückungskupplung 56 zum Einrücken in Richtung zur Kupplungsvorrichtung 65, wodurch eine Reibverbindung zwischen den einzelnen Kupplungselementen 66, 68 hergestellt wird. Zur Erzeugung dieses Überdruckes im Druckraum 46 gegenüber dem Versorgungsraum 44 ist eine Verbindung des zentralen Strömungsweges 80 mit einer Steuervorrichtung und einem Hydraulikflüssigkeitsvorrat erforderlich. Weder die Steuervorrichtung noch der Hydraulikflüssigkeitsvorrat sind zeichnerisch dargestellt, können aber der Fig. 1 der DE 44 23 640 A1 entnommen werden, und sind daher als inhaltlich in die jetzt vorliegende Patentanmeldung aufgenommen zu betrachten.

Der erste Strömungsweg 82 dient, über die Verzahnung 34 und die Strömungsdurchlässe 55, zur Herstellung eines Überdruckes in dem Versorgungsraum 44 gegenüber dem Druckraum 46, und damit zur Druckbeaufschlagung des Kolbens 54 der Überbrückungskupplung 56 zum Ausrücken in von der Kupplungsvorrichtung 65 fortweisender Richtung, wodurch die Reibverbindung zwischen den einzelnen Kupplungselementen 66, 68 der Kupplungsvorrichtung 65 gelöst wird. Zur Herstellung dieses Überdruckes im Versorgungsraum 44 gegenüber dem Druckraum 46 ist eine Verbindung des ersten Strömungsweges 82 mit der bereits erwähnten Steuervorrichtung und dem ebenfalls genannten Hydraulikflüssigkeitsvorrat erforderlich.

Fluidförmiges Medium, das über den ersten Strömungsweg 82 sowie die Strömungsdurchlässe 55 in den Versorgungsraum 44 gelangt ist, tritt, nach Kühlung der Kupplungselemente 66, 68 der Kupplungsvorrichtung 75, in den hydrodynamischen Kreis 24, um von dort aus über den zweiten Strömungsweg 84 wieder auszutreten.

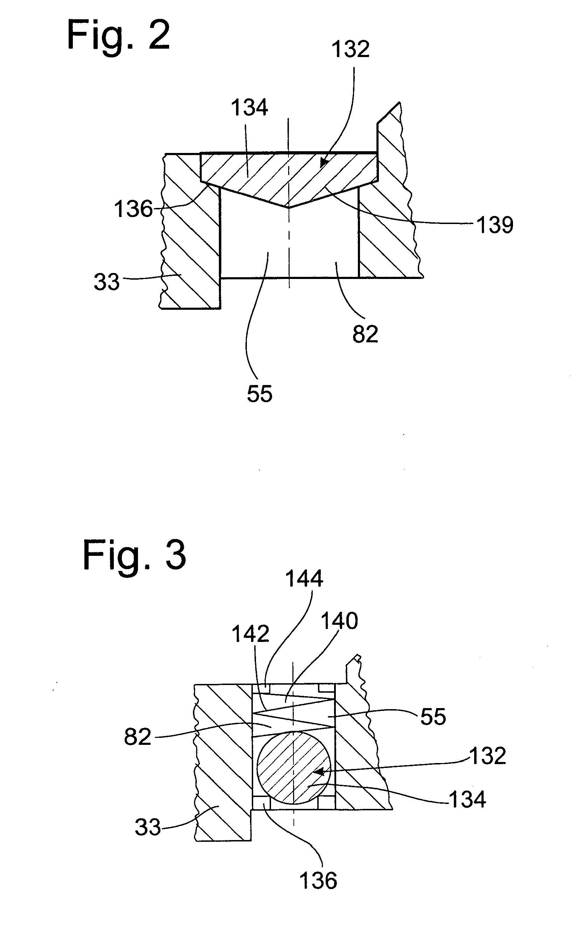

Der in Fig. 1 mit Y umkreiste Bereich der Trägernabe 33 ist in Fig. 2 oder 3 vergrößert herausgezeichnet. Fig. 2 zeigt ein die Trägernabe 33 radial umschließendes, zumindest im wesentlichen ringförmiges Verschlußelement 134 in Form einer Elastomerdichtung 139, die unter der Wirkung einer internen Vorspannung an einem Dichtungssitz 136 in Anlage gehalten ist. Der Dichtungssitz 136 umschließt jeweils einen Strömungsdurchlass 55 des ersten Strömungsweges 82, und ist an der der Elastomerdichtung 139 zugewandten Radialseite des Trägerelementes 33 vorgesehen. Die interne Vorspannung wird durch radiale Aufweitung des Verschlußelementes 134, also der Elastomerdichtung 139 erzielt, und zwar zunächst beim Aufbringen auf die Trägernabe 33, ebenso aber auch dann, wenn im Betriebszustand ein Überdruck im ersten Versorgungskanal 58 gegenüber dem Versorgungsraum 44 anliegt, und aufgrund dieses Druck- und Kraftverhältnisses eine weitere Aufweitung des Verschlußelementes 134 gegen die Wirkung seiner internen Vorspannung erfolgt. Bei dieser Aufweitung löst sich das Verschlußelement 134 vom Dichtungssitz 136 und gibt dadurch die Srömungsdurchlässe 55 zur Versorgung des Versorgungsraumes 44 mit frischem Strömungsmittel frei.

Sobald ein die hydrodynamische Kopplungsanordnung 1 aufnehmendes Kraftfahrzeug abgeschaltet wird, und dadurch diese Kopplungsanordnung außerhalb des Betriebszustandes versetzt wird, endet der Überdruck im ersten Versorgungskanal 58 gegenüber dem Versorgungsraum 44, so dass das Verschlußelement 134 unter der Wirkung der Vorspannung in seine Ausgangsposition, also auf den Dichtungssitz 136 zurückkehren kann. Damit werden die Strömungsdurchlässe 55 im wesentlichen druckdicht verschlossen. Da der Versorgungsraum 44 mit dem hydrodynamischen Kreis 24 in Druck- und Strömungsverbindung steht, wird bei einem Absickern von Strömungsmittel aus dem hydrodynamischen Kreis 24 beispielsweise über den zweiten Strömungsweg 84 ein Unterdruck im hydrodynamischen Kreis 24 hervorgerufen, der ein weiteres Absickern von Strömungsmittel über den zweiten Strömungsweg 84 zumindest vermindert. Außerdem wird durch das Verschlußelement 134 verhindert, dass ein sich im hydrodynamischen Kreis 24 aufbauender Unterdruck Luft über die Strömungsdurchlässe 55 aus dem ersten Strömungsweg 82 nachsaugt. Diese Luft würde sich beim Wiederbefüllen des Kupplungsgehäuses 5 beim nächsten Inbetriebsetzten des Kraftfahrzeuges und damit der hydrodynamischen Kopplungsvorrichtung 1 als hinderlich erweisen. Somit wirkt das Verschlußelement 134 in Verbindung mit dem Dichtungssitz 136 als Verschluß 132 für die Strömungsdurchlässe 55 im ersten Strömungsweg 82.

In Fig. 3 ist ein Verschluß 132 in Form einer Ventileinrichtung 140 dargestellt, die jeweils innerhalb eines Strömungsdurchlasses 55 angeordnet ist. Die Ventileinrichtung 140 verfügt über eine Ventilfeder 142, die sich einerends an einer Abstützung 144 und anderenends an einem zumindest im wesentlichen kugelförmigen Verschlußelement 134 abstützt, und dadurch eine Vorspannung für das Verschlußelement 134 erzeugt, durch welche dieses gegen den Dichtungssitz 136 gepresst wird. Wie bereits anhand des als Elastomerdichtung 139 ausgeführten Verschlußelementes 134 ausgeführt, wird auch das kugelförmige Verschlußelement 134 der Ventileinrichtung 140 bei einem Überdruck im ersten Versorgungskanal 58 gegenüber dem Versorgungsraum 44 bei Betriebszustand vom zugeordneten Dichtungssitz 136 abgehoben, und dadurch der jeweilige Strömungsdurchlass 55 des Strömungsweges 82 freigegeben. Bei fehlendem Überdruck im ersten Versorgungskanal 82 gegenüber dem Versorgungsraum 44, also außerhalb des Betriebszustandes, wird dagegen das Verschlußelement 134 unter der Wirkung der durch die Ventilfeder 142 erzeugten Vorspannung in seine Ausgangsposition, also auf den Dichtungssitz 136 zurückgedrückt. Damit werden die Strömungsdurchlässe 55 im wesentlichen druckdicht verschlossen. Somit wirkt auch bei dieser Ausführung das Verschlußelement 134 in Verbindung mit dem Dichtungssitz 136 als Verschluß 132 für die Strömungsdurchlässe 55 im ersten Strömungsweg 82.

### Bezugszeichenliste

- 1.: hydrodyn. Kopplungsvorrichtung
- 3.: Drehachse
- 5.: Kupplungsgehäuse
- 7.: antriebsseitige Gehäusewandung
- 9.: Pumpenradschale
- 11.: Pumpenradnabe
- 12.: Bauteil eines TD
- 13.: Lagerzapfen
- 14.: Bauteil eines TD
- 15.: Befestigungsaufnahme
- 16: Pumpenradschaufeln
- 17.: Pumpenrad
- 19.: Turbinenrad
- 21.: Turbinenradschale
- 22: Turbinenradschaufeln
- 23.: Leitrad
- 24.: hydrodynamischer Kreis
- 25.: lnnentorus
- 26.: Leitradnabe
- 27.: Freilauf
- 28: Leitradschaufeln
- 29.: Axiallagerung
- 30.: Stützwelle
- 31.: Turbinenradfuss
- 32: Verzahnung
- 33.: Nabe
- 34: Verzahnung
- 35.: Axiallagerung
- 36.: Getriebeeingangswelle
- 37.: Mittenbohrung
- 38.: Abdichtung
- 39.: Abdichtung
- 43.: Hülse
- 44.: Versorgungsraum
- 45.: Abstützbereiche
- 46.: Druckraum
- 47.: zentraler Versorgungskanal
- 48.: Axiallagerungsbereich der Nabe
- 49.: Trennplatte
- 50.: Axialanlagefläche
- 52.: Strömungsdurchlässe
- 54.: Kolben
- 55.: Strömungsdurchlässe
- 56.: Überbrückungskupplung
- 58.: erster Versorgungskanal
- 60.: zweiter Versorgungskanal
- 63: Nietverbindung
- 64.: Innenlamellenträger
- 65.: Kupplungsvorrichtung
- 66.: innere Kupplungselemente
- 68.: äußere Kupplungselemente
- 69.: Außenlamellenträger
- 70.: Verzahnung
- 72.: Dichtungsausnehmung
- 74.: Dichtungsausnehmung
- 76.: Druckscheibe
- 78.: Axialausnehmung
- 80.: zentraler Strömungsweg
- 82.: erster Strömungsweg
- 84.: zweiter Strömungsweg
- 85.: Nutungen
- 86.: Abdichtung
- 88.: Verzahnung
- 90.: Torsionsschwingungsdämpfer
- 92.: abtriebsseitige Nabenscheibe
- 94.: Umfangsfedersatz
- 96.: Deckblech
- 98.: Deckblech
- 110.: Abtrieb
- 132.: Verschluß
- 134.: Verschlußelement
- 136.: Dichtungssitz
- 138.: Strömungsdurchgang
- 139.: Elastomerdichtung
- 140.: Ventileinrichtung
- 142.: Ventilfeder
- 144.: Abstützung

## Patentansprüche

1. Hydrodynamische Kopplungsanordnung mit einem um eine Drehachse drehbaren Kupplungsgehäuse, innerhalb welchem zumindest ein durch wenigstens ein Pumpen- und ein Turbinenrad gebildeter hydrodynamischer Kreis sowie zumindest eine Überbrückungskupplung vorgesehen ist, die zur Herstellung einer Wirkverbindung zwischen einem Antrieb und einem Abtrieb für eine Einrückbewegung und zur Aufhebung dieser Wirkverbindung für eine Ausrückbewegung beaufschlagbar ist, wobei der hydrodynamische Kreis sowie zumindest ein Druckraum zur Beaufschlagung der Überbrückungskupplung an jeweils wenigstens einen Strömungsweg angeschlossen sind, durch welchen der hydrodynamische Kreis oder der zumindest eine Druckraum an wenigstens eine Druckmittelversorgung angeschlossen sind,
**dadurch gekennzeichnet,**
**dass** zumindest ein zur Befüllung des Kupplungsgehäuses (5) dienender Strömungsweg (82) mit einem Verschluß (132) versehen ist, der durch Öffnung für eine Freigabe des Strömungsweges (82) während des Betriebszustandes vorgesehen ist, außerhalb dieses Betriebszustandes aber durch Schließung für eine zumindest verzögerte Abnahme des Innendruckes im Kupplungsgehäuse (5) und damit dessen Befüllvolumens sorgt.

2. Hydrodynamische Kopplungsanordnung nach Anspruch 1 mit einem eine innerhalb des Kupplungsgehäuses vorgesehene Nabe durchdringenden Strömungsweg,
**dadurch gekennzeichnet,**
**dass** an dem Verschluß (132) bei Überschreitung eines vorbestimmten Druck-und Kraftverhältnisses gegen die Wirkung einer internen Vorspannung ein Abhub von einem innerhalb eines Strömungsdurchlasses (55) des Strömungswegs (82) vorgesehenen. Dichtungssitz (136) zur Freigabe des Strömungsdurchlasses (55) auslösbar ist, während der Verschluß (132) bis zum Erreichen dieses Druck- und Kraftverhältnisses unter der Wirkung der internen Vorspannung an dem Dichtungssitz (136) in Anlage gehalten ist.

3. Hydrodynamische Kopplungsanordnung nach Anspruch 2,
**dadurch gekennzeichnet,**
**dass** der Verschluß (132) durch ein die Nabe (33) im Erstreckungsbereich des Strömungsdurchlasses (55) zumindest im wesentlichen ringförmig umgreifendes Verschlußelement (134) gebildet ist, in welchem die interne Vorspannung durch radiale Aufweitung entsteht, und an welchem der durch Überschreitung des vorbestimmten Druck- und Kraftverhältnisses veranlasste Abhub vom Dichtungssitz (136) in Erstreckungsrichtung des Strömungsdurchlasses (55) erfolgt, während das Verschlußelement (134) bis zum Erreichen dieses Druck- und Kraftverhältnisses unter der Wirkung der internen Vorspannung auf dem Dichtungssitz (136) gehalten ist.

4. Hydrodynamische Kopplungsanordnung nach Anspruch 3,
**dadurch gekennzeichnet,**
**dass** der Dichtungssitz (136), den Strömungsdurchlass (55) umschließend, an dessen dem Verschlußelement (134) zugewandten Radialseite vorgesehen ist.

5. Hydrodynamische Kopplungsanordnung nach Anspruch 3 oder 4,
**dadurch gekennzeichnet,**
**dass** das Verschlußelement (134) durch eine Elastomerdichtung (139) gebildet ist.

6. Hydrodynamische Kopplungsanordnung nach Anspruch 2,
**dadurch gekennzeichnet,**
**dass** der Verschluß (132) durch eine innerhalb des Strömungsdurchlasses (55) angeordnete Ventileinrichtung (140) gebildet ist, in welche die interne Vorspannung durch Kompression einer ein Verschlußelement (134) in Richtung zum Dichtungssitz (136) belastenden Ventilfeder (142) eingebracht ist, wobei an der Ventileinrichtung (140) bei Überschreitung des vorbestimmten Druck- und Kraftverhältnisses der Abhub des Verschlußelementes (134) von dem Dichtungssitz (136) in Erstreckungsrichtung des Strömungsdurchganges (138) erfolgt, während das Verschlußelement (134) bis zum Erreichen dieses Druck- und Kraftverhältnisses unter der Wirkung der internen Vorspannung auf dem Dichtungssitz (136) gehalten ist.

7. Hydrodynamische Kopplungsanordnung nach Anspruch 6,
**dadurch gekennzeichnet,**
**dass** der Dichtungssitz (136), den Strömungsdurchlass (55) verengend, innerhalb desselben und benachbart zum Verschlußelement (144) vorgesehen ist.

8. Hydrodynamische Kopplungsanordnung nach Anspruch 6 oder 7,
**dadurch gekennzeichnet,**
**dass** die Ventileinrichtung (140) durch ein Drosselrückschlagventil gebildet ist.
